# EUROPÄISCHE PATENTSCHRIFT

(11) **EP 2 768 690 B1**
(45) Veröffentlichungstag und Bekanntmachung des Hinweises auf die Patenterteilung: **15.07.2020**
(21) Anmeldenummer: 12816016.5
(22) Anmeldetag: 05.12.2012
(51) Int. Cl.: B60L 3/10, B60L 15/20, B60T 8/00

(54) **DREHZAHLFENSTER BASIERTE REGELSTRATEGIE FÜR ELEKTROMASCHINE**
SPEED-WINDOW-BASED CONTROL STRATEGY FOR AN ELECTRICAL MACHINE
STRATÉGIE DE RÉGLAGE BASÉE SUR UNE FENÊTRE DE VITESSE DE ROTATION POUR UN MOTEUR ÉLECTRIQUE

(30) Priorität: 15.12.2011 DE 102011088729
(43) Veröffentlichungstag der Anmeldung: 27.08.2014
(73) Patentinhaber: Vitesco Technologies GmbH, 30165 Hannover (DE)
(72) Erfinder: SEMSEY, Akos, 93051 Regensburg (DE)
(74) Vertreter: Waldmann, Georg Alexander
(86) Internationale Anmeldenummer: PCT/EP2012/074504
(87) Internationale Veröffentlichungsnummer: WO 2013/087479

(56) Entgegenhaltungen:
- WO-A2-2009/073128
- US-A1- 2003 132 664
- US-A1- 2009 115 362
- US-B1- 7 739 005

## Beschreibung

Die vorliegende Erfindung betrifft eine Motorsteuerung und ein Verfahren zum Steuern einer Elektromaschine, insbesondere einer Synchronmaschine zum Antreiben eines Fahrzeuges, wobei eine Grenzgröße berücksichtigt wird, welche in Abhängigkeit einer Fahrsituation eine mechanische Betriebsgrenze der Elektromaschine anzeigt.

Moderne Elektromotoren, insbesondere Wechselstrommotoren (Synchronmotoren, Asynchronmotoren, Reluktanzmotoren, etc.) werden von Frequenzumrichtern (auch Umrichter oder Inverter genannt, welche einen Gleichstrom in einen Wechselstrom gewünschter Frequenz umwandeln) mit elektrischer Energie versorgt und somit hinsichtlich eines zu lieferten Drehmoments gesteuert. Dabei wandelt der Umrichter einen beispielsweise aus einer Batterie entnommenen Gleichstrom in einen drei-phasigen Drehstrom um.

In einem konventionellen System, z.B. einem konventionellen Fahrzeug, erhält der Umrichter über Signalleitungen oder Datenbusse Steuerdaten, welche z.B. Daten über einen Drehmomentsollwert umfassen können. Der Drehmomentsollwert kann als ein Zielwert angesehen werden, welcher ein von der Elektromaschine an einer Antriebswelle zu lieferndes Drehmoment definieren kann. Der Sollwert kann beispielsweise von dem Fahrer des Fahrzeugs durch Betätigen eines Schubvortriebshebels oder -pedals oder eines entsprechenden Schalters angezeigt werden. Die Ansteuerung des Umrichters in einem konventionellen System ist somit rein drehmomentbasiert.

Die Druckschriften US 7 739 005 B1, US 2003/132664 A1 und US 2009/115362 offenbaren eine Motorsteuerung zum Steuern eines Elektromotors eines Fahrzeugs.

Die Druckschrift WO2009/073128 A2 beschreibt ein Drehmomentverteilungssystem für einen Verbrennungsmotor. Wie in den vorangehend genannten Veröffentlichungsschriften umfasst auch hier das System als einziges Antriebsaggregat einen Verbrennungsmotor, wobei in diesem Fall weitere Einsatzgeräte für landwirtschaftliche Arbeiten als angetriebene Werkzeuge genannt sind.

Es ist beobachtet worden, dass herkömmliche Motorsteuerungen und Motorsteuerverfahren in einer Reihe von Fahrsituationen keine befriedigende Leistung zeigen.

Es ist eine Aufgabe der vorliegenden Erfindung, eine Motorsteuerung und ein Motorsteuerverfahren bereitzustellen, mit welchem eine Elektromaschine in Fahrsituationen zuverlässig gesteuert wird, um insbesondere die Sicherheit zu erhöhen und/oder den Fahrkomfort zu verbessern.

Die Aufgabe wird gelöst durch die Gegenstände der unabhängigen Ansprüche, indem eine Motorsteuerung und ein Verfahren zum Steuern einer Elektromaschine bereitgestellt sind.

Die abhängigen Ansprüche spezifizieren spezifische Ausführungsformen der Motorsteuerung bzw. des Motorsteuerungsverfahrens.

Gemäß der Erfindung ist bereitgestellt eine Motorsteuerung zum Steuern einer Elektromaschine, insbesondere zum Antreiben eines Fahrzeuges, wobei die Motorsteuerung aufweist: einen Eingangsanschluss zum Eingeben einer für ein von der Elektromaschine zu liefern gewünschtes Drehmoment indikativen gewünschten Sollgröße (insbesondere monoton zum gewünschten Drehmoment) und zum Eingeben einer für eine mechanische Betriebsgrenze der Elektromaschine indikativen Grenzgröße, und einen Prozessor zum Ausgeben einer für ein von der Elektromaschine tatsächlich zu lieferndes Drehmoment indikativen tatsächlichen Sollgröße, wobei der Prozessor ausgebildet ist, die tatsächliche Sollgröße basierend auf der gewünschten Sollgröße und der Grenzgröße zu bestimmen.

Die Elektromaschine kann dabei beispielsweise ein Synchronmotor, ein Asynchronmotor, ein Reluktanzmotor etc. eines Elektrogeräts (wie etwa einer Waschmaschine), insbesondere eines Haushaltsgeräts, eines Fahrzeuges, etwa eines Personenfahrzeugs oder eines Lastkraftfahrzeugs, sein.

Die Motorsteuerung kann insbesondere ausgebildet sein, der Elektromaschine Steuersignale zuzuführen und/oder der Elektromaschine Leistungsströme zuzuführen (insbesondere 3-phasigen Wechselstrom, welcher einen Stator der Elektromaschine antreibt) . Die gewünschte Sollgröße kann der Motorsteuerung in Form eines elektrischen oder optischen gewünschten Sollgrößensignals über den Eingangsanschluss zugeführt werden. Die gewünschte Sollgröße kann dabei beispielsweise einem gewünschten Drehmoment (Vortrieb oder einer Bremswirkung) entsprechen, welches von einem Fahrer des Fahrzeugs angezeigt ist.

Der Eingangsanschluss ist beispielsweise als eine Schnittstelle an der Motorsteuerung mit entsprechender Anzahl von Datenbits ausgebildet, über die die Motorsteuerung die oben genannten Soll- und Grenzgrößen und weitere erforderlichen Daten von einem Bus- oder Kommunikationskanal erhält.

Ferner ist der Eingangsanschluss zum Eingeben einer für eine mechanische Betriebsgrenze der Elektromaschine indikativen Grenzgröße vorgesehen, wobei die Grenzgröße insbesondere ein Drehzahlintervall (insbesondere durch eine obere und eine untere Grenze) und/oder ein Drehmomentintervall (insbesondere durch eine obere und eine untere Grenze) definieren kann, womit ein momentaner zulässiger Arbeitsbereich der Elektromaschine definiert sein kann. Die Grenzgröße kann dabei der Motorsteuerung in Form eines elektrischen und/oder optischen Grenzgrößensignals über den Eingangsanschluss zugeführt werden.

Der Prozessor kann dabei eine logisch/arithmetische Einheit umfassen und kann insbesondere eine integrierte Schaltung umfassen, welche insbesondere einen (Halbleiter-) Chip bilden kann. Der Prozessor bestimmt (insbesondere aufweisend, Berechnen, Ableiten etc.) die tatsächliche Sollgröße basierend auf der gewünschten Sollgröße und der Grenzgröße. Insbesondere bestimmt der Prozessor die tatsächliche Sollgröße in Abhängigkeit von der gewünschten Sollgröße und der Grenzgröße. Insbesondere kann bei einer sich ändernden Grenzgröße eine sich ändernde tatsächliche Sollgröße von dem Prozessor bestimmt (und ausgegeben) werden.

Die tatsächliche Sollgröße kann dann zum Ansteuern der Elektromaschine ausgegeben werden. Insbesondere kann aufgrund der tatsächlichen Sollgröße, welche vom Prozessor bestimmt worden ist, ein Leistungsstrom (insbesondere drei-phasiger Wechselstrom) bestimmt sein und erzeugt sein, welcher der Elektromaschine zugeführt wird.

Unter Berücksichtigung der Grenzgröße kann in bestimmten Fahrsituationen die gewünschte Sollgröße korrigiert werden, um die tatsächliche Sollgröße zu bestimmen, welche von der gewünschten Sollgröße (nach oben oder nach unten) abweichen kann. Dies kann in bestimmten Fahrsituationen einen besseren Fahrkomfort und/ oder eine höhere Fahrsicherheit gewähren. Damit ist eine gegenüber dem Stand der Technik verbesserte Motorsteuerung bereitgestellt.

Gemäß einer Ausführungsform der vorliegenden Erfindung ist die Motorsteuerung als Umrichter (auch als Inverter bezeichnet, welcher zum Umwandeln einer Gleichspannung in eine Wechselspannung ausgebildet ist) ausgebildet (d.h. die Motorsteuerung kann in den Umrichter integriert sein, bzw. der Umrichter kann die Motorsteuerung bereitstellen oder aufweisen), wobei der Umrichter zum Umrichten eines Gleichstroms in einen Betriebsstrom ausgebildet ist (welcher der Elektromaschine zugeführt werden kann), wobei der Betriebsstrom ein, insbesondere drei-phasiger, Wechselstrom ist, wobei der Umrichter ausgebildet ist, den Betriebsstrom (zum Betreiben der Elektromaschine) basierend auf der tatsächlichen Sollgröße zu erzeugen.

Die tatsächliche Sollgröße kann somit ein Steuersignal für eine in dem Umrichter umfasste Leistungselektronik sein, welche mehrere Leistungstransistoren aufweisen kann, welche durch eine geeignete Gate-Ansteuerungsschaltung angesteuert sein können. Der Umrichter kann somit mit dem in ihm enthaltenen Prozessor sehr schnell kommunizieren, um die von dem Prozessor bestimmte tatsächliche Sollgröße ohne Zeitverzögerung zu erhalten.

Herkömmlicher Weise wurde der Umrichter von einem separaten Steuergerät (typisch EV-Controller und/oder ESP-Steuergerät) gesteuert, was aufgrund der erforderlichen Kommunikation zwischen dem separaten Steuergerät und dem Umrichter zu Zeitverzögerungen geführt hat, wodurch die Qualität und Dynamik der Regelung begrenzt waren.

Ausführungsformen der Erfindung ermöglichen eine Steuerung einer Elektromaschine unter verschiedenen Fahranforderungen, ohne dass die Steuerung aufgrund von Zeitverzögerungen, welche durch erforderliche zeitintensive Kommunikationen erzeugt sind, beeinträchtigt wird. Beispielsweise kann eine Antriebsschlupf- regelung, eine Bremsschlupfregelung, eine Stabilität bei kooperativer Bremsung erfordern, dass ein angetriebenes Rad oder eine angetriebene Welle mit einem bestimmten Drehmoment angetrieben oder abgebremst werden muss, dass jedoch gleichzeitig eine bestimmte untere und/oder eine bestimmte obere Drehzahlgrenze nicht unter- bzw. überschritten wird. Werden beispielsweise die untere und/oder die obere Drehzahlgrenze (eine Verkörperung der Grenzgröße) der Motorsteuerung, insbesondere dem Umrichter, zugeführt, ist eine zuverlässige und sichere Steuerung in diesen Fahrsituationen ermöglicht, da keine Zeitverzögerungen zwischen der Eingabe der verschiedenen erforderlichen Daten auftritt.

Ausführungsformen der Erfindung unterstützen beispielsweise ein Beschleunigen des Rades, wobei verhindert wird, dass sich das Rad zu schnell dreht und unterstützen auch ein Bremsen des Rades, wobei verhindert wird, dass sich das Rad zu langsam dreht, was zu einem Verlust der Seitenführungskräfte führen würde.

Ausführungsformen der Erfindung unterstützen auch ein Losfahren auf rutschiger Fahrbahn oder ein Rekuperieren (elektrische Bremsung), was gemäß herkömmlichen Verfahren oft zu Problemen und Schwierigkeiten geführt hat.

Gemäß einer Ausführungsform der vorliegenden Erfindung ist die Motorsteuerung ausgebildet, die gewünschte Sollgröße und/oder die Grenzgröße während eines Betriebes der Elektromaschine in zeitlichen Abständen von zwischen 1 ms und 50 ms, insbesondere zwischen 5 ms und 15 ms, insbesondere alle 10 ms fortwährend zu erhalten, und die tatsächliche Sollgröße in zeitlichen Abständen von zwischen 0,05 ms und 0,5 ms, insbesondere zwischen 0,1 ms und 0,2 ms, fortwährend zu erzeugen, wobei die gewünschte Sollgröße und/oder die Grenzgröße während eines Betriebes der Elektromaschine zum Antreiben eines Fahrzeuges in Abhängigkeit von einer Fahrsituation geändert wird.

Insbesondere kann die gewünschte Sollgröße zeitlich hintereinander abgetastet werden, insbesondere mittels eines Sensors, welcher mit der Motorsteuerung in Kommunikation befindlich ist, und/oder zugeführt werden. Ebenso kann die Grenzgröße zeitlich hintereinander abgetastet werden, insbesondere mit einer gleichen Rate wie die gewünschte Sollgröße. Die Abtastung kann dabei z.B. alle 0,05 ms oder alle 0,01 ms oder alle 0,15 ms erfolgen. Insbesondere kann sich nicht nur die gewünschte Sollgröße, sondern auch die Grenzgröße (oder insbesondere eine daraus ableitbare Maximaldrehzahl, eine daraus ableitbare Minimaldrehzahl, eine daraus abgeleitetes Minimaldrehmoment und ein daraus ableitbares Maximaldrehmoment) über die Zeit ändern.

Insbesondere kann die Fahrsituation durch eine Geschwindigkeit, eine Beschleunigung, eine Position des Fahrzeuges oder eine Kombination der vorgenannten Eigenschaften charakterisiert sein. Die Fahrsituation kann auch durch äußere Bedingungen, wie etwas Temperatur, Feuchtigkeit, Wetterbedingung etc. charakterisiert sein. Die Fahrsituation kann dabei auch eine Fahrercharakteristik berücksichtigen. Durch ein rasches Eingeben der gewünschten Sollgröße und/oder der Grenzgröße und übermitteln an die Motorsteuerung kann die Elektromaschine von der entsprechend schnell reagierenden Motorsteuerung in einer Reihe von Fahrsituation zuverlässig gesteuert werden, um insbesondere eine Fahrsicherheit und einen Fahrkomfort zu verbessern.

Gemäß der vorliegenden Erfindung ist die Motorsteuerung ausgebildet, die Grenzgröße zu erhalten, aus welcher eine für eine obere Grenzdrehzahl der Elektromaschine indikative Maximaldrehzahl, und eine für eine unter Grenzdrehzahl der Elektromaschine indikative Minimaldrehzahl, und ein für ein oberes Grenzdrehmoment der Elektromaschine indikatives Maximaldrehmoment, und ein für ein unteres Grenzdrehmoment der Elektromaschine indikatives Minimaldrehmoment ableitbar ist, wobei aus der Grenzgröße die Maximaldrehzahl, die Minimaldrehzahl, das Maximaldrehmoment und das Minimaldrehmoment ableitbar sind, wobei die Motorsteuerung ausgebildet ist, die tatsächliche Sollgröße basierend auf der Maximaldrehzahl, der Minimaldrehzahl, dem Maximaldrehmoment und dem Minimaldrehmoment zu bestimmen.

Die obere Grenzdrehzahl kann beispielsweise in Form einer Winkelgeschwindigkeit in Einheiten von Grad pro Sekunde, oder in Einheiten von Umdrehung pro Minute (RPM) angegeben sein, welche beispielsweise an einer Ausgangswelle der Elektromaschine bestimmt wird. Die somit gegebene Maximaldrehzahl kann dabei eine maximale Drehzahl der Elektromaschine bei einer gegebenen Fahrsituation charakterisieren. Die Minimaldrehzahl kann dabei eine minimale Drehzahl der Elektromaschine bei der gegebenen Fahrsituation charakterisieren oder definieren.

Das Maximaldrehmoment kann ein maximales Drehmoment der Elektromaschine bei einer gegebenen Fahrsituation definieren und das Minimaldrehmoment kann ein minimales Drehmoment der Elektromaschine bei einer gegebenen Fahrsituation definieren.

Die Grenzgröße kann somit eine Reihe von Quantitäten umfassen, insbesondere die Maximaldrehzahl, die Minimaldrehzahl, das Maximaldrehmoment und das Minimaldrehmoment. Die einzelnen Grenzwertgrößen (Maximaldrehzahl, Minimaldrehzahl, Maximaldrehmoment, Minimaldrehmoment) können dabei nacheinander oder parallel an die Motorsteuerung eingegeben werden. Insbesondere kann die Motorsteuerung aufgrund eines eingegebenen Datensignals die Grenzwerte ableiten oder bestimmen. Insbesondere kann die Maximaldrehzahl zusammen mit der Minimaldrehzahl ein erlaubtes Drehzahlintervall definieren und das Maximaldrehmoment kann zusammen mit dem Minimaldrehmoment ein erlaubtes Drehmomentintervall definieren. Insbesondere kann das erlaubte Drehzahlintervall zusammen mit dem erlaubten Drehmomentintervall einen erlaubten Arbeitsbereich der Elektromaschine definieren, welcher etwa einem rechteckigen Flächenbereich in einem zweidimensionalen Graphen entsprechen kann. Falls die tatsächliche Drehzahl während eines Betriebes der Elektromaschine außerhalb des erlaubten Drehzahlintervalls liegt, so wird das tatsächliche Solldrehmoment so (innerhalb des erlaubten Drehmomentintervalls) geregelt bzw. eingestellt, dass die tatsächliche Drehzahl innerhalb des erlaubten Drehzahlintervalls zu liegen kommt. Dabei begrenzt das erlaubte Drehmomentintervall, innerhalb welcher Grenzen das tatsächliche Solldrehmoment eingestellt werden darf.

In vielen Fahrsituationen erfordert die gewünschte Sollgröße eine Korrektur in Abhängigkeit des erlaubten Drehzahlintervalls der Elektromaschine. Weiter erfordert in vielen Fahrsituationen die gewünschte Sollgröße eine Korrektur in Abhängigkeit von dem erlaubten Drehmomentintervall.

Die Motorsteuerung kann die gewünschte Sollgröße in Abhängigkeit der oberen Grenzdrehzahl, der unteren Grenzdrehzahl, dem oberen Grenzdrehmoment und dem unteren Grenzdrehmoment korrigieren, um die tatsächliche Sollgröße zu bestimmen. Insbesondere kann der Prozessor des Umrichters (d.h. der Prozessor der Motorsteuerung) die vier Grenzgrößen (obere Grenzdrehzahl, untere Grenzdrehzahl, oberes Grenzdrehmoment, unteres Grenzdrehmoment) derart berücksichtigen, dass bei Erreichen einer Drehzahlgrenze eine Drehmomentkorrektur eingeführt wird, die gegen die ungewünschte Drehzahländerung wirkt. Dabei können (oder brauchen) Korrekturen nur an den Drehzahlgrenzen bzw. Grenzdrehzahlen wirken und nur dazu führen, dass die tatsächliche Sollgröße innerhalb des erlaubten Drehmomentintervall fällt, so dass die tatsächliche Sollgröße nie kleiner als das untere Grenzdrehmoment wird und nie größer als das obere Grenzdrehmoment.

Das erlaubte Drehzahlintervall kann zusammen mit dem erlaubten Drehmomentintervall einen erlaubten Arbeitsbereich (auch Drehzahl-Drehmoment-Fenster genannt) definieren, wobei die tatsächliche Sollgröße sich dann von der gewünschten Sollgröße unterscheidet, falls bei Betrieb der Elektromaschine das Drehzahl-Drehmoment-Fenster verlassen wird oder droht verlassen zu werden.

Die lokale zusätzliche Regelung im Umrichter kann dabei von einem Steuergerät, welches für die Antriebs- und/oder Fahrdynamikregelung zuständig ist, ferngesteuert sein. Dabei kann sowohl das erlaubte Drehzahlintervall als auch das erlaubte Drehmomentintervall in Abhängigkeit von der Fahrsituation angepasst werden. Dabei kann beispielsweise die obere Grenzdrehzahl auf einen solchen Drehzahlwert eingestellt werden, welcher dem erlaubten Antriebsschlupf entspricht, und die untere Grenzdrehzahl kann auf einen solchen Drehzahlwert eingestellt werde, welcher den erlaubten Bremsschlupf widerspiegelt.

Falls die gewünschte Sollgröße (insbesondere bei gegebener Fahrbahnqualität) zu einem Durchdrehen oder zu einer Blockierneigung führen würde, kann der Prozessor in dem Umrichter automatisch verhindern, dass die angetriebenen Räder eine Drehzahl erreichen, welche zu einem Stabilitätsverlust führen würde.

Gemäß einer Ausführungsform der vorliegenden Erfindung ist die Motorsteuerung ferner ausgebildet, eine Istdrehzahl (oder Ist -Drehzahl) der Elektromaschine und/oder ein Istdrehmoment (oder Ist-Drehmoment) der Elektromaschine zu erhalten und/oder zu bestimmen und zu bestimmen, ob die Istdrehzahl zwischen der Minimaldrehzahl und der Maximaldrehzahl liegt und/oder ob das Istdrehmoment zwischen dem Minimaldrehmoment und dem Maximaldrehmoment liegt. Dabei werden die Istdrehzahl und/oder das Istdrehmoment insbesondere während eines Betriebes der Elektromaschine in zeitlichen Abständen von zwischen 0,05 ms und 0,5 ms, insbesondere zwischen 0,1 ms und 0,2 ms, fortwährend erhalten und/oder bestimmt.

Dabei die Ist-Drehzahl indikativ für eine tatsächliche momentane Drehzahl der Elektromaschine sein. Ferner kann das Ist-Drehmoment indikativ für ein tatsächlich momentan (an einer Ausgabewelle) geliefertes Drehmoment der Elektromaschine sein. Insbesondere kann die Ist-Drehzahl kontinuierlich bzw. fortwährend in zeitlichen Abständen von 0,05 ms und 0,5 ms, insbesondere zwischen 0,1 ms und 0,2 ms erhalten bzw. bestimmt werden und der Motorsteuerung zugeführt werden. Insbesondere kann das Ist-Drehmoment in zeitlichen Abständen von zwischen 0,05 ms und 0,5 ms, insbesondere zwischen 0,1 ms und 0,2 ms, fortwährend erhalten werden oder bestimmt werden bzw. der Motorsteuerung zugeführt werden. Auch kann die Bestimmung, ob die Ist-Drehzahl zwischen der Minimaldrehzahl und Maximaldrehzahl liegt und/oder die Bestimmung, ob das Ist-Drehmoment zwischen dem Minimaldrehmoment und dem Maximaldrehmoment liegt, in zeitlichen Abständen von zwischen 0,05 ms und 0,5 ms, insbesondere zwischen 0,1 ms und 0,2 ms fortwährend durchgeführt werden.

Insbesondere kann die Motorsteuerung bzw. der Umrichter die Ist-Drehzahl und auch das Ist-Drehmoment aus der von dem Prozessor bestimmten tatsächlichen Sollgröße ableiten, welche als Steuersignal fungieren kann, um einen Betriebsstrom der Elektromaschine zu erzeugen. Beispielsweise kann die Frequenz des Betriebsstroms indikativ für die Ist-Drehzahl des Elektromotors bzw. der Elektromaschine sein. Ebenso kann der Betriebsstrom (insbesondere ein Verhältnis eines q-Stroms zu einem d-Strom) indikativ für ein von der Elektromaschine geliefertes Ist-Drehmoment sein. Alternativ kann der Umrichter Daten von Messsensoren empfangen, aus welchen die Ist-Drehzahl bzw. das Ist-Drehmoment ableitbar sein können.

Gemäß einer Ausführungsform der vorliegenden Erfindung ist die Motorsteuerung ausgebildet, die tatsächliche Sollgröße relativ zu der gewünschten Sollgröße zu ändern, falls die Istdrehzahl nicht zwischen der Minimaldrehzahl und der Maximaldrehzahl liegt.

Damit kann gewährleistet werden, dass die tatsächliche Sollgröße sowohl in dem erlaubten Drehzahlintervall als auch in dem erlaubten Drehmomentintervall liegt, um insbesondere eine Fahrsicherheit und einen Fahrkomfort zu verbessern.

Gemäß einer Ausführungsform der vorliegenden Erfindung ist die Motorsteuerung ausgebildet, die tatsächliche Sollgröße relativ zu der gewünschten Sollgröße zu verkleinern, falls die Ist-Drehzahl oberhalb der Maximaldrehzahl liegt. Dies erfolgt insbesondere dann, falls die gewünschte Sollgröße zudem positiv ist.

Wenn die tatsächliche Sollgröße kleiner als die gewünschte Sollgröße bestimmt ist, wird ein Vortrieb gegenüber einem gewünschten Vortrieb verkleinert, um somit darauf hinzuwirken, dass die Ist-Drehzahl abnimmt. Damit kann beispielsweise ein Durchdrehen der Reifen verhindert oder reduziert werden.

Gemäß einer Ausführungsform der vorliegenden Erfindung ist die Motorsteuerung ausgebildet, die tatsächliche Sollgröße relativ zu der gewünschten Sollgröße zu vergrößern, falls die Istdrehzahl unterhalb der Minimaldrehzahl liegt.

Falls die tatsächliche Sollgröße größer als die gewünschte Sollgröße ist, kann die Ist-Drehzahl erhöht werden, um Fahrkomfort und/oder Fahrsicherheit zu erhöhen.

Gemäß einer Ausführungsform der vorliegenden Erfindung ist die Motorsteuerung ausgebildet, die tatsächliche Sollgröße gleich der gewünschten Sollgröße zu erzeugen, falls die Istdrehzahl zwischen der Minimaldrehzahl und der Maximaldrehzahl liegt und das Istdrehmoment zwischen dem Minimaldrehmoment und dem Maximaldrehmoment liegt.

Falls somit sowohl die Ist-Drehzahl innerhalb des erlaubten Drehzahlintervalls liegt als auch das Ist-Drehmoment innerhalb des erlaubten Drehzahlintervalls liegt, wird von der Motorsteuerung keine Korrektur vorgenommen, so dass die tatsächliche Sollgröße der gewünschten Sollgröße entspricht bzw. dieser gleich ist. Dabei kann (oder braucht) die Motorsteuerung nur dann eine Korrektur an der gewünschten Sollgröße vornehmen, um eine gegenüber der gewünschten Sollgröße abweichende tatsächliche Sollgröße zu bestimmen, wenn entweder die Ist-Drehzahl an den Grenzen des erlaubten Drehzahlintervalls liegt oder außerhalb des erlaubten Drehzahlintervalls liegt. Dabei muss immer gewährleistet werden, dass das Ist-Drehmoment an den Grenzen des erlaubten Drehmomentintervalls oder innerhalb des erlaubten Drehmomentintervalls liegt. Innerhalb des erlaubten Drehmoment-Drehzahl-Fensters können ein Fahrkomfort und eine Fahrsicherheit gewährleistet sein, so dass eine Korrektur in diesem Bereich nicht notwendig ist.

Merkmale, welche (individuell oder in irgendeiner Kombination) in Bezug auf eine Motorsteuerung zum Steuern einer Elektromaschine genannt, beschrieben, bereitgestellt oder eingesetzt werden, können ebenso (individuell oder in irgendeiner Kombination) für ein Verfahren zum Steuern einer Elektromaschine verwendet, bereitgestellt oder eingesetzt werden gemäß einer Ausführungsform der vorliegenden Erfindung und umgekehrt.

Gemäß einer Ausführungsform der Erfindung ist bereitgestellt ein Verfahren zum Steuern einer Elektromaschine, insbesondere zum Antreiben eines Fahrzeuges, wobei das Verfahren aufweist: Eingeben einer für ein von der Elektromaschine zu liefern gewünschtes Drehmoment indikativen gewünschten Sollgröße, Eingeben einer für eine mechanische Betriebsgrenze der Elektromaschine indikativen Grenzgröße und Ausgeben einer für ein von der Elektromaschine tatsächlich zu lieferndes Drehmoment indikativen tatsächlichen Sollgröße, wobei die tatsächliche Sollgröße basierend auf der gewünschten Sollgröße und der Grenzgröße bestimmt wird.

Die Motorsteuerung oder das Verfahren können beispielsweise als oder für eine Elektromotorregelung für Elektrofahrzeuge oder Hybridfahrzeuge verwendet werden bzw. eingesetzt werden. Ausführungsformen der Erfindung können überall dort eingesetzt werden, wo es eine regelungstechnische Aufgabe ist, einen Elektromotor auf ein gewünschtes Drehmoment zu regeln und gleichzeitig eine zu geringe Drehzahl und/oder eine zu hohe Drehzahl zu verhindern. Angewendet kann die Motorsteuerung bzw. das Verfahren auch z.B. auf einen Range-Extender-Umrichter, wo die Arbeitspunktregelung und der automatisierte Startvorgang des Aggregats auf die Umrichter-integrierte Drehzahlgrenz-Regelung zurückgreifen können.

Ausführungsformen der vorliegenden Erfindung bieten beispielsweise folgende Vorteile:
- Beim Elektroantrieb fährt das durch die Elektromaschine angetriebene Fahrzeug stabiler und komfortabler auf Straßen, wo die Räder durchdrehen könnten.
- Die Leistungsaufnahmespitzen beim Losfahren auf rutschiger Fahrbahn können verhindert werden.
- Das Fahrzeug kann die Stabilität beim elektrischen Bremsen (Rekuperieren) beibehalten, wenn die Fahrbahn einen niedrigeren Reibwert hat (die Drehzahlregelung kann ähnlich wirken wie bei ABS oder Motorschleppmomenten-Regelung, aber mit weniger Schwingung in der Motordrehzahl).
- Eine rein elektrische Abbremsung bis zum Stillstand kann ermöglicht werden, weil in diesem Fall die untere Grenzdrehzahl auf Null eingestellt werden kann.
- Komfortfahrfunktionen wie Anfahrhilfe ohne Zurückrollen können leichter realisiert werden (insbesondere kann dabei die untere Grenzdrehzahl auf Null gesetzt werden, um ein Zurückrollen zu verhindern).
- Die Umschaltung zwischen Drehmomentregelung und Drehzahlbegrenzung (z.B. bei der Blockierneigung) kann sanfter und schneller erfolgen.
- Beim Range-Extender kann die Regelung des Arbeitspunkts und der Startvorgang einfacher gestaltet werden, wobei die Regelung schneller und präziser arbeiten kann.
- Ferner können beim Range-Extender kurze Schubphasen, langsames Durchdrehen zur Vermeidung von Verrostung einfacher realisiert werden.
- Für Fahrzeuge mit Hybridantrieb können mehrere Funktionen je nach Antriebsarchitektur einfach zu realisieren sein (z.B. Abwürgeschutz-Funktion beim Starter-Generator, schnelle Synchronisation von Wellen beim Schalten, etc.).

Ausführungsformen der vorliegenden Erfindung stellen einen Umrichter zum Ansteuern einer Elektromaschine bereit, wobei der Umrichter eine Drehzahlbegrenzungsfunktion hat, und gleichzeitig eine Drehzahlerfassung, wobei die Steuerung der Elektromaschine verbessert ist, da Kommunikationswege verkürzt sind und kein Bus-Zyklus in der Kette vorhanden ist.

Insbesondere, wenn die gewünschte Sollgröße einen gewünschten Drehmoment-Sollwert und wenn die Grenzgröße eine obere und eine untere Drehzahlgrenze und eine obere und eine untere Drehmomentgrenze aufweisen, kann der Umrichter eine Steuerung der Elektromaschine in einer Reihe von Fahranforderungen bereitstellen, wobei ein Fahrkomfort und eine Fahrsicherheit verbessert werden können. Insbesondere kann eine Umschaltung von Drehmomentregelung auf Drehzahlbegrenzung autonom und lokal im Umrichter durchgeführt werden, anstatt von außen kommandiert zu werden.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.

Ausführungsformen der vorliegenden Erfindung werden nun in Bezug auf die angehängten Zeichnungen illustriert. Die Erfindung ist nicht auf die beschriebenen oder illustrierten Ausführungsformen begrenzt.
Fig. 1 illustriert schematisch eine regelungstechnische Architektur für einen Umrichter zum Steuern einer Elektromaschine gemäß einer Ausführungsform der vorliegenden Erfindung;
Fig. 2 zeigt einen Graphen zur Illustration einer Steuercharakteristik des in Fig. 1 illustrierten Umrichters;
Fig. 3 illustriert einen Graphen zur Illustration einer Steuercharakteristik des in Fig. 1 illustrierten Umrichters;
Fig. 4, Fig. 5 und Fig. 6 illustrieren weitere Graphen zur Illustration von Steuercharakteristiken des in Fig. 1 illustrierten Umrichters bei verschiedenen Fahrsituationen bzw. -anforderungen.

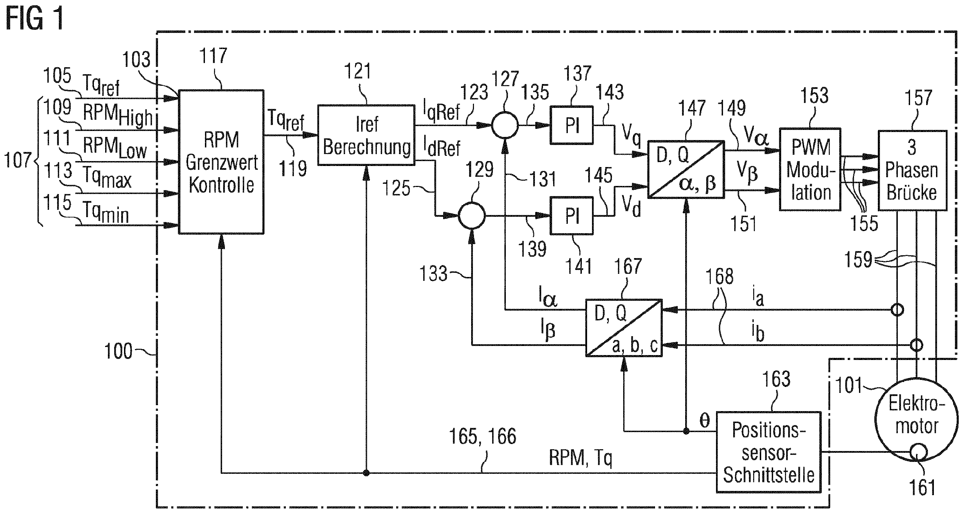

**Fig. 1** illustriert schematisch einen Umrichter 100 zum Steuern einer Elektromaschine 101 gemäß einer Ausführungsform der vorliegenden Erfindung. Der Umrichter 100 stellt eine Motorsteuerung zum Steuern des Elektromotors 101 bereit, wobei die Motorsteuerung einen Eingangsanschluss 103 zum Eingeben eines Referenzdrehmoments 105 (Tqref) (eine für ein von der Elektromaschine zu liefern gewünschtes Drehmoment indikative gewünschte Sollgröße) und zum Eingeben einer für eine mechanische Betriebsgrenze der Elektromaschine indikativen Grenzgröße 107 aufweist. Dabei umfasst die Grenzgröße 107 ein Signal 109, aus welchem eine obere Grenzdrehzahl (RPMHigh) ableitbar ist, ein Signal 111, aus welchem eine untere Grenzdrehzahl (RPMLow) ableitbar ist, ein Signal 113, aus welchem ein oberes Grenzdrehmoment (Tqmax) ableitbar ist, und ein Signal 115, aus welchem ein unteres Grenzdrehmoment (Tqmin) ableitbar ist.

Die gewünschte Sollgröße 105 und die Grenzgröße 107, welche die Signale 109, 111, 113 und 115 umfasst, werden über einen oder mehrere Eingangsanschlüsse 103 an einen Prozessor 117 eingegeben, welcher ausgebildet ist, eine tatsächliche Sollgröße 119 (Tqrefnew) auszugeben, welche indikativ für ein von der Elektromaschine 101 tatsächlich zu lieferndes Drehmoment ist.

Die tatsächliche Sollgröße 119 wird von dem Prozessor 117 einer Kalkulationseinheit 121 zugeführt, welche aus dem Signal 119 ein Stromsignal 123 (Iqref) ausgibt sowie ein Signal 125 (Idref), welche Signale zwei Subtraktionselementen 127 und 129 zugeführt werden. Dem Subtraktionselement 127 wird dabei ein Signal 131 (Iα) zugeführt und dem Subtraktionselement 129 wird ein Signal 133 (Iß) zugeführt.

Das Ergebnis der Subtraktion des Signals 131 von dem Signal 123, d.h. das Signal 135, wird einem Regler 137 zugeführt, welcher beispielsweise ein PI-Regler sein kann. Das Ergebnis der Subtraktion des Signals 133 von dem Signal 125, d.h. das Signal 139, wird einem Regler 141 zugeführt, welcher ebenfalls ein PI-Regler sein kann.

Die Regler 137, 141 erzeugen ein Spannungssignal 143 (Vq) bzw. 145 (Vd), welche einem Transformatorblock 147 zugeführt werden. Der Transformatorblock 147 transformiert die Spannungssignale in dem d-q-Koordinatensystem in Spannungssignale 149 bzw. 151 in einem α-β-Koordinatensystem. In einem Pulsbreite-Modulationsblock 153 werden aus den Spannungssignalen 149, 151 Steuersignale 155 erzeugt, welche einer Leistungselektronik 157 zugeführt werden.

Die Leistungselektronik 157 erzeugt daraufhin einen drei-phasigen Strom 159, welcher einem Stator des Elektromotors 101 zugeführt wird. Aufgrund des drei-phasigen Stroms 159 bewegt der Elektromotor seine Welle 161, deren Drehzahl und Position über ein Messmodul 163 erfasst wird. Ein Ist-Drehzahlsignal 165 (RPM) und ein Ist-Drehmomentsignal 166 werden dabei sowohl dem Prozessor 117 als auch dem Kalkulationsmodul 121 zugeführt.

Ein Positionssignal Θ der Welle 161 des Elektromotors 101 wird den Transformationsblöcken 147 und 167 zugeführt, um die jeweiligen Transformationen korrekt durchführen zu können.

Rückkopplung ist durch die Signalzweige 168 bereitgestellt, welche Stromsignale ia, ib an den Transformationsblock 167 ausgeben, welcher daraus die Signale 131, 133 durch Transformation in das d-q-Koordinatensystem erhält.

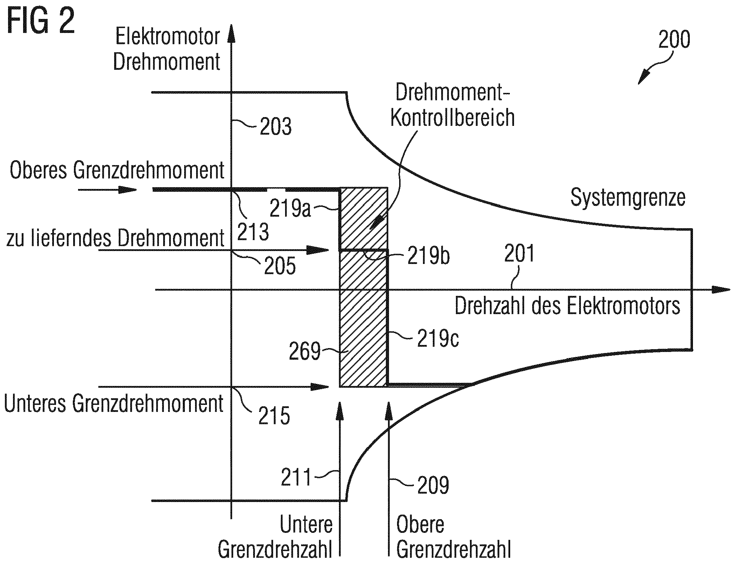

**Fig. 2** zeigt einen Graphen 200, wobei auf einer Abszisse 201 die Drehzahl des Elektromotors 201 aufgetragen ist und wobei auf einer Ordinate 203 das an der Welle 161 erzeugte Drehmoment aufgetragen ist. Der Pfeil 209 zeigt eine obere Grenzdrehzahl, der Pfeil 211 zeigt eine untere Grenzdrehzahl des Elektromotors 101 an. Der Pfeil 213 zeigt ein oberes Grenzdrehmoment und der Pfeil 215 zeigt ein unteres Grenzdrehmoment der Elektromaschine 101 an. Somit entsprechen die Größen 209, 211, 213 und 215 den Eingabesignalen 109, 111, 113 und 115, welche in Fig. 1 dem Prozessor 117 zugeführt werden.

Der Pfeil 205 zeigt ein gewünschtes zu lieferndes Drehmoment an, welches beispielsweise von einem Fahrer des Fahrzeugs angefordert bzw. erzeugt wird, welches Fahrzeug von dem Elektromotor 101 angetrieben wird. Ein schraffierter Bereich 269 entspricht einem erlaubten Arbeitsbereich bzw. einem erlaubten Drehzahl- Drehmoment-Fenster, innerhalb dessen der Elektromotor 101 bei einer gegebenen Fahrsituation mit Drehmomentvorgabe 205 betrieben werden soll.

Eine Kurve 219 zeigt eine tatsächliche Sollgröße (tatsächliches Drehmoment), welche basierend auf den Eingangssignalen 205, 209, 211, 213 und 215 bestimmt ist gemäß einer Ausführungsform der vorliegenden Erfindung, und entspricht dem Signal 119, welches von dem Prozessor 117 der Fig. 1 ausgegeben wird.

Die Kurve 219 setzt sich aus den geraden Abschnitten 219a, 219b, 219c zusammen. Wie aus Fig. 2 ersichtlich ist, weicht das tatsächliche Drehmoment in dem Abschnitt 219a von dem gewünschten Drehmoment 205 nach oben ab, d.h. das tatsächliche Drehmoment 219a ist größer als das gewünschte Drehmoment 205. Jedoch liegt das Drehmoment 219a innerhalb des erlaubten Arbeitsbereichs 269. In dem Abschnitt 219b entspricht das tatsächliche Drehmoment dem gewünschten Drehmoment 205. In einem Abschnitt 219c ist das tatsächliche Drehmoment kleiner als das gewünschte Drehmoment 205, liegt jedoch innerhalb des erlaubten Arbeitsbereichs 269. Die Änderung bzw. die Abweichung des tatsächlichen Drehmoments 219a, 219b bzw. 219c von dem gewünschten Drehmoment 205 wird durch den Prozessor 117 bereitgestellt und ist erforderlich, um den Elektromotor 101 innerhalb des erlaubten Arbeitsbereichs 269 betreiben zu können.

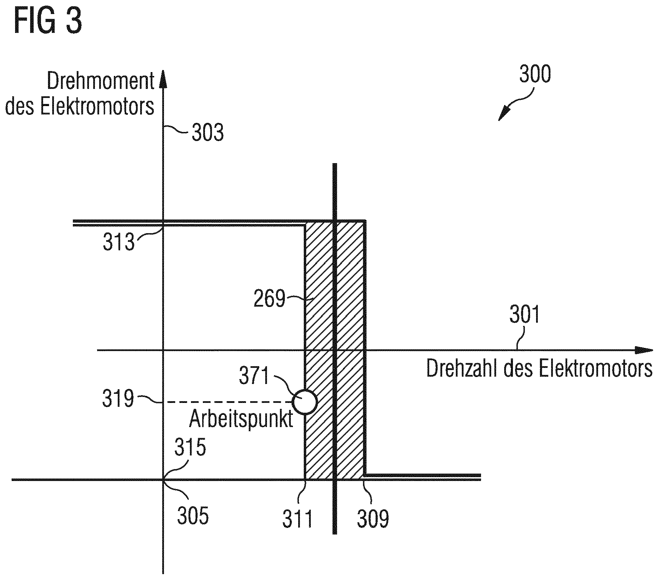

**Fig. 3** zeigt schematisch einen Graphen 300 zur Illustration einer Regelcharakteristik des Prozessors 117 bzw. des Umrichters 100 während einer ASB-Bremssituation. Eine Abszisse 301 zeigt die Drehzahl des Elektromotors 101 an und eine Ordinate 303 zeigt ein von dem Elektromotor geliefertes Drehmoment an.

Ein erlaubtes Drehzahlintervall ist durch die Grenzdrehzahlen 309 und 311 definiert und ein erlaubtes Drehmomentintervall ist durch die Grenzdrehmomente 313 und 315 definiert. Ein gewünschtes Drehmoment 305 liegt bei negativen Werten, was ein gewünschtes Bremsen anzeigt. Gleichzeitig liegt das untere Grenzdrehmoment 315 bei einem gleichen Wert wie das gewünschte Drehmoment 305, d.h. bei einem negativen Drehmomentwert.

Um den Betriebszustand des Elektromotors 101 innerhalb des erlaubten Arbeitsbereichs 369 zu halten, regelt der Umrichter 100 bzw. der Prozessor 121 das tatsächliche Drehmoment auf einem Wert 319, welcher größer ist als das gewünschte Drehmoment 305, da bei Aufrechterhalten des gewünschten Drehmoments 305 der Elektromotor 101 in einen Drehzahlbereich unterhalb der unteren Grenzdrehzahl 311 gelangen würde. Damit kann ein Blockieren bei einer Bremsung verhindert werden. Insbesondere wird als Arbeitspunkt der Punkt 371 gewählt.

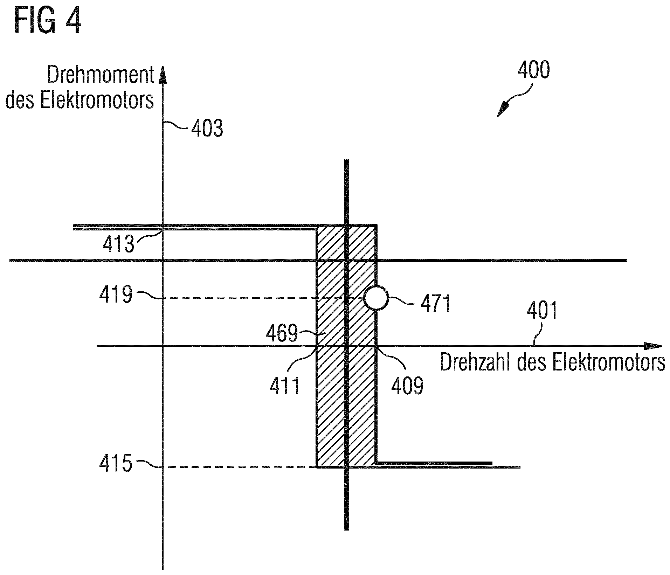

**Fig. 4** zeigt einen Graphen 400, wobei auf einer Abszisse 401 die Drehzahl und auf einer Ordinate 403 das Drehmoment des Elektromotors 101 aufgezeichnet ist. Wieder ist ein erlaubter Arbeitsbereich 469 durch ein erlaubtes Drehzahlintervall 409, 411 definiert sowie durch ein erlaubtes Drehmomentintervall 413, 415. Ein gewünschtes Drehmoment 405 wird von einem Fahrer des Fahrzeugs vorgegeben.

Gezeigt ist eine Situation beim Starten auf einer rutschigen Fahrbahn. Wie aus Fig. 4 ersichtlich ist, regelt der Prozessor 121 bzw. der Umrichter 100 den Elektromotor 101 derart, dass das tatsächliche Drehmoment 419 unterhalb des gewünschten Drehmoments 405 liegt, um den Elektromotor 101 innerhalb des erlaubten Arbeitsbereichs 469 zu betreiben. Der Arbeitspunkt 471 ist dabei durch die obere Grenzdrehzahl 409 und das tatsächliche Drehmoment 419 definiert. Würde der Elektromotor 101 tatsächlich das gewünschte Drehmoment 405 liefern, so würde die Drehzahl des Motors 101 über die obere Grenzdrehzahl 409 hinaus steigen, was gemäß dieser Ausführungsform verhindert ist.

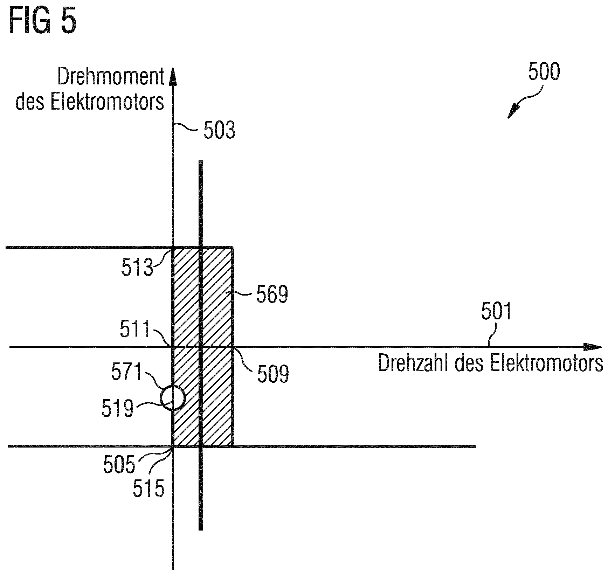

**Fig. 5** zeigt einen Graphen 500 zur Illustration einer Regelcharakteristik des Umrichters 100, wobei auf einer Abszisse 501 eine Drehzahl und auf einer Ordinate 503 ein Drehmoment des Elektromotors 101 aufgezeichnet ist. Gezeigt ist eine Situation, in welcher ein Fahrzeug zum Stillstand abgebremst werden soll.

Wiederum ist ein erlaubter Arbeitsbereich 569 des Elektromotors 101 durch ein erlaubtes Drehzahlintervall 509, 511 und ein erlaubtes Drehmomentintervall 513, 515 definiert. Ein gewünschtes Drehmoment 505 gleicht dem unteren Grenzdrehmoment 515. Man beachte hierbei, dass die untere Grenzdrehzahl 511 bei 0 Umdrehungen/min lokalisiert ist.

Wie aus Fig. 5 ersichtlich ist, regelt der Prozessor 117 bzw. der Umrichter 100 das tatsächliche Drehmoment 519 derart, dass es oberhalb des gewünschten Drehmoments 505 liegt, jedoch noch innerhalb des erlaubten Arbeitsbereichs 569, insbesondere bei einem Arbeitspunkt 571 mit einer Drehzahl von 0 Umdrehungen/min. Würde der Elektromotor 101 anstatt des Drehmoments 519 das niedrigere gewünschte Drehmoment 505 liefern, so würde das Fahrzeug nach dem Stoppen rückwärts fahren, was gemäß dieser Ausführungsform dadurch verhindert wird, dass immer gewährleistet ist, dass der Elektromotor 101 in dem erlaubten Arbeitsbereich 569 betrieben ist , welcher durch eine Drehzahl von 0 Umdrehungen/min. nach unten begrenzt ist.

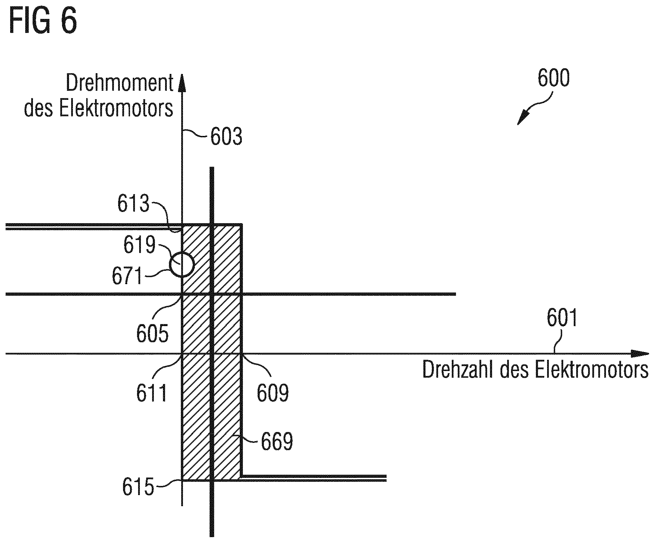

**Fig. 6** illustriert einen Graphen 600, wobei auf einer Abszisse 601 eine Drehzahl und auf einer Ordinate 603 ein Drehmoment des Elektromotors 101 aufgezeichnet ist. Illustriert ist eine Fahrsituation, wobei an einem Berg gestartet wird, wobei somit auf einer schiefen Ebene angefahren wird.

Wiederum ist ein erlaubter Arbeitsbereich 669 durch ein erlaubtes Drehzahlintervall 609, 611 und ein erlaubtes Drehmomentintervall 613, 615 definiert. Ein gewünschtes Drehmoment 605 ist beispielsweise durch einen Fahrer des Fahrzeugs vorgegeben.

Wie aus Fig. 6 ersichtlich ist, regelt der Umrichter 100 bzw. der Prozessor 117 das tatsächliche Drehmoment 619 derart, dass es oberhalb des gewünschten Drehmoments 605 liegt, jedoch innerhalb des erlaubten Arbeitsbereich 669, insbesondere bei einem Arbeitspunkt 671 mit einer Drehzahl von 0 Umdrehungen/min. Würde der Elektromotor 101 anstatt des Drehmoments 619 das von dem Fahrer gewünschte Drehmoment 605 liefern, so würde die Drehzahl des Motors 101 negativ werden, d.h. das Fahrzeug würde rückwärts fahren, was unerwünscht ist. Damit kann in dieser Fahrsituation eine Fahrsicherheit erhöht werden, dass verhindert wird, dass das Fahrzeug unbeabsichtigter Weise rückwärts fährt. Der Arbeitspunkt 671 ist somit durch das tatsächliche Drehmoment 619 und die untere Grenzdrehzahl 611 gegeben.

Wie aus den Fign. 3 bis 6 ersichtlich ist, welche Regelstrategien für verschiedene Fahrsituation illustrieren, kann die Grenzgröße (welche insbesondere ein erlaubtes Drehzahlintervall und ein erlaubtes Drehmomentintervall anzeigen kann) in Abhängigkeit von der Fahrsituation laufend geändert werden, um angepasst an die jeweilige Fahrsituation einen zuverlässigen Betrieb des Elektromotors zu gewährleisten, welcher insbesondere eine Fahrsicherheit und einen Fahrkomfort verbessert.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

### Bezugszeichenliste

100 Umrichter
101 Elektromotor
103 Eingangsanschluss
105 gewünschte Sollgröße
107 Grenzgröße
109, 111, 113, 115 Grenzdrehzahlen und Grenzdrehmomente
117 Prozessor
119 tatsächliche Sollgröße
121 Kalkulationsblock
123, 125 Stromreferenzsignale
127, 129 Differenzelemente
131, 133 Stromsignale
135, 139 Differenzsignale
137, 141 PI-Regler
143, 145 Spannungssignale
147, 167 Transformationsblöcke
149, 151 Spannungssignale
153 Modulationsblock
155 3-Phasen-Stromsignale
157 Leistungselektronik
159 3-Phasen-Leistungsströme
161 Motorwelle
163 Positionsmesseinrichtung
165 Ist-Drehzahl
200 bis 600 Graphen
201 bis 601 Abszissen
203 bis 603 Ordinaten
205 bis 605 gewünschte Sollgröße
209, 211 bis 609, 611 Grenzdrehzahlen
213, 215 bis 613, 615 Grenzdrehmomente
219 bis 619 tatsächliches Drehmoment
269 bis 669 erlaubter Arbeitsbereich (Drehmoment-Drehzahl-Fenster)
371 bis 671 Arbeitspunkt

## Patentansprüche

1. Motorsteuerung (100) zum Steuern einer Elektromaschine (101) wobei die Motorsteuerung aufweist:
- einen Eingangsanschluss (103) zum Eingeben einer für ein von der Elektromaschine zu liefern gewünschtes Drehmoment indikativen gewünschten Sollgröße (105) und zum Eingeben einer für eine mechanische Betriebsgrenze der Elektromaschine indikativen Grenzgröße (107); und
- einen Prozessor (117) zum Ausgeben einer für ein von der Elektromaschine tatsächlich zu lieferndes Drehmoment indikativen tatsächlichen Sollgröße (119), wobei der Prozessor ausgebildet ist, die tatsächliche Sollgröße basierend auf der gewünschten Sollgröße und der Grenzgröße zu bestimmen,
**dadurch gekennzeichnet, dass**
- die Motorsteuerung (100) ausgebildet ist, die Grenzgröße zu erhalten, aus welcher eine für eine obere Grenzdrehzahl (109) der Elektromaschine indikative Maximaldrehzahl, und eine für eine untere Grenzdrehzahl (111) der Elektromaschine indikative Minimaldrehzahl, und ein für ein oberes Grenzdrehmoment (113) der Elektromaschine indikatives Maximaldrehmoment, und ein für ein unteres Grenzdrehmoment (115) der Elektromaschine indikatives Minimaldrehmoment ableitbar sind, wobei aus der Grenzgröße die Maximaldrehzahl, die Minimaldrehzahl, das Maximaldrehmoment und das Minimaldrehmoment ableitbar sind;
- wobei die Motorsteuerung ferner ausgebildet ist, die tatsächliche Sollgröße basierend auf der Maximaldrehzahl, der Minimaldrehzahl, dem Maximaldrehmoment und dem Minimaldrehmoment zu bestimmen.

2. Motorsteuerung gemäß Anspruch 1, welche als Umrichter ausgebildet ist zum Umrichten eines Gleichstroms in einen Betriebsstrom (159) für die Elektromaschine, wobei der Betriebsstrom ein Wechselstrom ist, wobei der Umrichter ausgebildet ist, den Betriebsstrom basierend auf der tatsächlichen Sollgröße (119) zu erzeugen.

3. Motorsteuerung gemäß einem der vorangehenden Ansprüche, welche ausgebildet ist, die gewünschte Sollgröße (105) und/oder die Grenzgröße (107) während eines Betriebes der Elektromaschine (101) in zeitlichen Abständen von zwischen 1 ms und 50 ms fortwährend zu erhalten, und die tatsächliche Sollgröße in zeitlichen Abständen von zwischen 0,05 ms und 0,5 ms fortwährend zu erzeugen, wobei die gewünschte Sollgröße und/oder die Grenzgröße während eines Betriebes der Elektromaschine zum Antreiben eines Fahrzeuges in Abhängigkeit von einer Fahrsituation geändert werden.

4. Motorsteuerung gemäß einem der vorangehenden Ansprüche, welche ferner ausgebildet ist, eine Istdrehzahl (165) der Elektromaschine, und ein Istdrehmoment (166) der Elektromaschine zu erhalten und/oder zu bestimmen und zu bestimmen, ob die Istdrehzahl zwischen der Minimaldrehzahl und der Maximaldrehzahl liegt und ob das Istdrehmoment zwischen dem Minimaldrehmoment und dem Maximaldrehmoment liegt.

5. Motorsteuerung gemäß dem vorangehenden Anspruch, welche ausgebildet ist, die tatsächliche Sollgröße relativ zu der gewünschten Sollgröße zu ändern, falls die Istdrehzahl (165) nicht zwischen der Minimaldrehzahl (111) und der Maximaldrehzahl (109) liegt.

6. Motorsteuerung gemäß Anspruch 4 oder 5, welche ausgebildet ist, die tatsächliche Sollgröße (419) relativ zu der gewünschten Sollgröße (405) zu verkleinern, falls die Istdrehzahl oberhalb der Maximaldrehzahl liegt.

7. Motorsteuerung gemäß einem der Ansprüche 4 bis 6, welche ausgebildet ist, die tatsächliche Sollgröße (319, 519, 619) relativ zu der gewünschten Sollgröße (305, 505, 605) zu vergrößern, falls die Istdrehzahl unterhalb der Minimaldrehzahl liegt.

8. Motorsteuerung gemäß dem vorangehenden Anspruch, welche ausgebildet ist, die tatsächliche Sollgröße gleich der gewünschten Sollgröße zu erzeugen, falls die Istdrehzahl zwischen der Minimaldrehzahl und der Maximaldrehzahl liegt und das Istdrehmoment zwischen dem Minimaldrehmoment und dem Maximaldrehmoment liegt.

9. Verfahren zum Steuern einer Elektromaschine (101) wobei das Verfahren folgende Verfahrensschritte aufweist:
- Eingeben einer für ein von der Elektromaschine zu liefern gewünschtes Drehmoment indikativen gewünschten Sollgröße (105);
- Eingeben einer für eine mechanische Betriebsgrenze der Elektromaschine indikativen Grenzgröße (107); und
- Ausgeben einer für ein von der Elektromaschine tatsächlich zu lieferndes Drehmoment indikativen tatsächlichen Sollgröße (119), wobei die tatsächliche Sollgröße basierend auf der gewünschten Sollgröße und der Grenzgröße bestimmt wird,
**gekennzeichnet durch**
- Erhalten der Grenzgröße, aus welcher eine für eine obere Grenzdrehzahl (109) der Elektromaschine indikative Maximaldrehzahl, und eine für eine untere Grenzdrehzahl (111) der Elektromaschine indikative Minimaldrehzahl, und ein für ein oberes Grenzdrehmoment (113) der Elektromaschine indikatives Maximaldrehmoment, und ein für ein unteres Grenzdrehmoment (115) der Elektromaschine indikatives Minimaldrehmoment ableitbar sind, wobei aus der Grenzgröße die Maximaldrehzahl, die Minimaldrehzahl, das Maximaldrehmoment und das Minimaldrehmoment ableitbar sind;
- Bestimmen der tatsächlichen Sollgröße basierend auf der Maximaldrehzahl, der Minimaldrehzahl, dem Maximaldrehmoment und dem Minimaldrehmoment.

## Claims

1. Motor controller (100) for controlling an electrical machine (101), wherein the motor controller has:
- an input connection (103) for entering a desired setpoint variable (105) which is indicative of a torque which is desired to be delivered by the electrical machine and for entering a limit variable (107) which is indicative of a mechanical operating limit of the electrical machine; and
- a processor (117) for outputting an actual setpoint variable (119) which is indicative of a torque which is actually to be delivered by the electrical machine, wherein the processor is designed to determine the actual setpoint variable based on the desired setpoint variable and the limit variable, **characterized in that**
- the motor controller (100) is designed to obtain the limit variable from which a maximum rotation speed, which is indicative of an upper limit rotation speed (109) of the electrical machine, and a minimum rotation speed, which is indicative of a lower limit rotation speed (111) of the electrical machine, and a maximum torque, which is indicative of an upper limit torque (113) of the electrical machine, and a minimum torque, which is indicative of a lower limit torque (115) of the electrical machine, can be derived, wherein the maximum rotation speed, the minimum rotation speed, the maximum torque and the minimum torque can be derived from the limit variable;
- wherein the motor controller is further designed to determine the actual setpoint variable based on the maximum rotation speed, the minimum rotation speed, the maximum torque and the minimum torque.

2. Motor controller according to Claim 1, which is designed as a converter for converting a direct current into an operating current (159) for the electrical machine, wherein the operating current is an alternating current, wherein the converter is designed to generate the operating current based on the actual setpoint variable (119).

3. Motor controller according to either of the preceding claims, which is designed to continuously obtain the desired setpoint variable (105) and/or the limit variable (107) during operation of the electrical machine (101) at time intervals of between 1 ms and 50 ms, and to continuously generate the actual setpoint variable at time intervals of between 0.05 ms and 0.5 ms, wherein the desired setpoint variable and/or the limit variable are changed during operation of the electrical machine for driving a vehicle depending on a driving situation.

4. Motor controller according to one of the preceding claims, which is further designed to obtain and/or to determine an actual rotation speed (165) of the electrical machine and an actual torque (166) of the electrical machine, and to determine whether the actual rotation speed lies between the minimum rotation speed and the maximum rotation speed and whether the actual torque lies between the minimum torque and the maximum torque.

5. Motor controller according to the preceding claim, which is designed to change the actual setpoint variable relative to the desired setpoint variable if the actual rotation speed (165) does not lie between the minimum rotation speed (111) and the maximum rotation speed (109).

6. Motor controller according to Claim 4 or 5, which is designed to reduce the actual setpoint variable (419) relative to the desired setpoint variable (405) if the actual rotation speed lies above the maximum rotation speed.

7. Motor controller according to one of Claims 4 to 6, which is designed to increase the actual setpoint variable (319, 519, 619) relative to the desired setpoint variable (305, 505, 605) if the actual rotation speed lies below the minimum rotation speed.

8. Motor controller according to the preceding claim, which is designed to generate the actual setpoint variable equal to the desired setpoint variable if the actual rotation speed lies between the minimum rotation speed and the maximum rotation speed and the actual torque lies between the minimum torque and the maximum torque.

9. Method for controlling an electrical machine (101), wherein the method comprises the following method steps:
- entering a desired setpoint variable (105) which is indicative of a torque which is desired to be delivered by the electrical machine;
- entering a limit variable (107) which is indicative of a mechanical operating limit of the electrical machine; and
- outputting an actual setpoint variable (119) which is indicative of a torque which is actually to be delivered by the electrical machine, wherein the actual setpoint variable is determined based on the desired setpoint variable and the limit variable,
**characterized by**
- obtaining the limit variable from which a maximum rotation speed, which is indicative of an upper limit rotation speed (109) of the electrical machine, and a minimum rotation speed, which is indicative of a lower limit rotation speed (111) of the electrical machine, and a maximum torque, which is indicative of an upper limit torque (113) of the electrical machine, and a minimum torque, which is indicative of a lower limit torque (115) of the electrical machine, can be derived, wherein the maximum rotation speed, the minimum rotation speed, the maximum torque and the minimum torque can be derived from the limit variable;
- determining the actual setpoint variable based on the maximum rotation speed, the minimum rotation speed, the maximum torque and the minimum torque.

## Revendications

1. Commande de moteur (100) destinée à commander une machine électrique (101), la commande de moteur comprenant :
- une borne d'entrée (103) destinée à entrer une grandeur de consigne souhaitée (105), indicative d'un couple souhaité à délivrer par la machine électrique, et destinée à entrer une grandeur limite (107), indicative d'une limite de fonctionnement mécanique de la machine électrique ; et
- un processeur (117) destiné à délivrer en sortie une grandeur de consigne effective (119), indicative du couple à délivrer effectivement par la machine électrique, le processeur étant configuré pour déterminer la grandeur de consigne effective en se basant sur la grandeur de consigne souhaitée et sur la grandeur limite,
**caractérisée en ce que**
- la commande de moteur (100) est configurée pour obtenir la grandeur limite à partir de laquelle peuvent être dérivés une vitesse de rotation maximale indicative d'une vitesse de rotation limite haute (109) de la machine électrique, et une vitesse de rotation minimale indicative d'une vitesse de rotation limite basse (111) de la machine électrique, et un couple maximal indicatif d'un couple limite haut (113) de la machine électrique, et un couple minimal indicatif d'un couple limite bas (115) de la machine électrique, la vitesse de rotation maximale, la vitesse de rotation minimale, le couple maximal et le couple minimal pouvant être dérivés de la grandeur limite ;
- la commande de moteur étant en outre configurée pour déterminer la grandeur de consigne effective en se basant sur la vitesse de rotation maximale, la vitesse de rotation minimale, le couple maximal et le couple minimal.

2. Commande de moteur selon la revendication 1, laquelle est réalisée sous la forme d'un onduleur destiné à convertir un courant continu en un courant de service (159) pour la machine électrique, le courant de service étant un courant alternatif, l'onduleur étant configuré pour générer le courant de service en se basant sur la grandeur de consigne effective (119).

3. Commande de moteur selon l'une des revendications précédentes, laquelle est configurée pour obtenir continuellement la grandeur de consigne souhaitée (105) et/ou la grandeur limite (107) pendant un fonctionnement de la machine électrique (101) à des intervalles de temps entre 1 ms et 50 ms, et pour générer continuellement la grandeur de consigne effective à des intervalles de temps entre 0,05 ms et 0,5 ms, la grandeur de consigne souhaitée et/ou la grandeur limite étant modifiées pendant un fonctionnement de la machine électrique pour la propulsion d'un véhicule en fonction d'une situation de conduite.

4. Commande de moteur selon l'une des revendications précédentes, laquelle est en outre configurée pour obtenir et/ou pour déterminer une vitesse de rotation réelle (165) de la machine électrique et un couple réel (166) de la machine électrique et pour déterminer si la vitesse de rotation réelle est comprise entre la vitesse de rotation minimale et la vitesse de rotation maximale et si le couple réel est compris entre le couple minimal et le couple maximal.

5. Commande de moteur selon l'une des revendications précédentes, laquelle est configurée pour modifier la grandeur de consigne effective par rapport à la grandeur de consigne souhaitée dans le cas où la vitesse de rotation réelle (165) n'est pas comprise entre la vitesse de rotation minimale (111) et la vitesse de rotation maximale (109)

6. Commande de moteur selon la revendication 4 ou 5, laquelle est configurée pour réduire la grandeur de consigne effective (419) par rapport à la grandeur de consigne souhaitée (405) dans le cas où la vitesse de rotation réelle est supérieure à la vitesse de rotation maximale.

7. Commande de moteur selon l'une des revendications 4 à 6, laquelle est configurée pour augmenter la grandeur de consigne effective (319, 519, 619) par rapport à la grandeur de consigne souhaitée (305, 505, 605) dans le cas où la vitesse de rotation réelle est inférieure à la vitesse de rotation minimale.

8. Commande de moteur selon l'une des revendications précédentes, laquelle est configurée pour générer la grandeur de consigne effective égale à la grandeur de consigne souhaitée dans le cas où la vitesse de rotation réelle est comprise entre la vitesse de rotation minimale et la vitesse de rotation maximale et le couple réel est compris entre le couple minimal et le couple maximal.

9. Procédé pour commander une machine électrique (101), le procédé comprenant les étapes suivantes :
- entrée d'une grandeur de consigne souhaitée (105), indicative d'un couple souhaité à délivrer par la machine électrique ;
- entrée d'une grandeur limite (107) indicative d'une limite de fonctionnement mécanique de la machine électrique ; et
- délivrance en sortie d'une grandeur de consigne effective (119), indicative du couple à délivrer effectivement par la machine électrique, la grandeur de consigne effective étant déterminée en se basant sur la grandeur de consigne souhaitée et sur la grandeur limite,
**caractérisée par**
- obtention de la grandeur limite, à partir de laquelle peuvent être dérivés une vitesse de rotation maximale indicative d'une vitesse de rotation limite haute (109) de la machine électrique, et une vitesse de rotation minimale indicative d'une vitesse de rotation limite basse (111) de la machine électrique, et un couple maximal indicatif d'un couple limite haut (113) de la machine électrique, et un couple minimal indicatif d'un couple limite bas (115) de la machine électrique, la vitesse de rotation maximale, la vitesse de rotation minimale, le couple maximal et le couple minimal pouvant être dérivés de la grandeur limite ;
- détermination de la grandeur de consigne effective en se basant sur la vitesse de rotation maximale, la vitesse de rotation minimale, le couple maximal et le couple minimal.
